# DEMANDE DE BREVET EUROPEEN

(11) **EP 2 208 931 A1**
(43) Date de publication de la demande: **21.07.2010**
(21) Numéro de dépôt: 10150202.9
(22) Date de dépôt: 07.01.2010
(51) Int. Cl.: F23Q 9/00, F23D 14/22, F23D 14/32

(54) **Brûleur pilote air-gaz pouvant fonctionner à l'oxygène**

(30) Priorité: 16.01.2009 FR 0950256
(71) Demandeur: L'AIR LIQUIDE, Société Anonyme pour l'Etude et l'Exploitation des Procédés Georges Claude, 75007 Paris (FR)
(72) Inventeur: Sanchez-Molinero, Ivan, 78000, Versailles (FR); Laurent, Jacky, 78210, Saint Cyr l'Ecole (FR); Mulon, Jacques, 91300, Massy (FR); Recourt, Patrick, 91460, Marcoussis (FR); Tsiava, Rémi, 91250, Saint Germain les Corbeil (FR)
(74) Mandataire: Conan, Philippe Claude

(57) **Abrégé**

Système comprenant au moins un brûleur pilote et un brûleur principal plus puissant, ledit brûleur pilote comprenant :
- au moins un premier tube ouvert à une extrémité et comportant au moins une première ligne d'amenée apte à admettre un gaz combustible dans ledit premier tube; et
- au moins un second tube ouvert à une extrémité et comportant au moins une troisième ligne d'amenée apte à admettre un gaz riche en oxygène dans ledit second tube;

**caractérisé en ce que** ledit brûleur pilote comprend en outre, au moins une seconde ligne d'amenée apte à alimenter en air ledit premier tube.

## Description

La présente invention concerne un brûleur pilote pour l'allumage ou le maintien d'une flamme d'un brûleur principal, une installation comprenant une chaudière ou un four apte à mettre en oeuvre la technique dite d'oxycombustion et un tel brûleur pilote, ainsi qu'un procédé mettant en oeuvre ladite installation notamment pour faciliter la capture du dioxyde de carbone, ou CO2, dans les fumées sortant de la chaudière ou du four.

Un brûleur pilote est un dispositif apte à générer une flamme, dite « pilote », destinée à allumer ou à maintenir la flamme d'au moins un brûleur principal, plus puissant. Typiquement un brûleur principal dégage 5 à 1000 fois plus d'énergie qu'un brûleur pilote. Selon une configuration particulière, le brûleur pilote dégage une puissance d'environ 4 à 10% de celle du brûleur principal. Selon une autre configuration particulière, le brûleur pilote dégage une puissance inférieure à 4% de celle du brûleur principal. Un brûleur pilote peut être allumé en permanence, par exemple pour stabiliser la combustion d'un combustible difficile dans brûleur principal, ou pour fournir un complément d'ignition dans des conditions anormales de fourniture du combustible à un brûleur principal. Il peut aussi n'être allumé que pour le démarrage du brûleur, pour son arrêt, ou à certains moments, par exemple lors de conditions opératoires délicates. Il peut aussi être utilisé pour réaliser tout ou partie de la montée en température d'une chaudière ou d'un four lors de son démarrage, avec ou sans allumage simultané du ou des brûleurs principaux.

Dans le domaine des brûleurs pilote, on connaît depuis longtemps des modèles adaptés aux chaudières ou aux fours fonctionnant en combustion à l'air, ou aérocombustion. De nombreuses techniques ont été développées dans le but de produire une flamme pilote de manière plus ou moins efficace, sûre et économique.

De manière générale, une flamme de brûleur pilote doit être une source fiable d'ignition. Elle doit en particulier être extrêmement stable.

Le document GB-A-2328735 décrit un brûleur pilote fonctionnant à l'air qui ne dispose que d'un passage pour le gaz combustible. L'oxydant utilisé pour la flamme pilote est l'air présent dans la chambre de combustion. Ce brûleur pilote ne permet pas d'obtenir une flamme très stable dans toutes les conditions d'opération.

Le document EP-A-972163 décrit un brûleur pilote plus élaboré avec air et gaz combustible mélangés préalablement à leur sortie du brûleur pilote. Cette configuration présente une stabilité accrue de la flamme en fonctionnement à l'air. Cependant, cette configuration ne rend pas possible un mode de fonctionnement en oxycombustion, c'est à dire avec comme comburant un gaz riche en oxygène.

Plus récemment, la technologie d'oxycombustion s'est développée dans différents domaines industriels, en particulier celui de la production d'énergie. Celle-ci permet d'introduire le moins possible d'éléments néfastes à la capture éventuelle du CO2, comme l'azote. Des brûleurs pilote plus adaptés à l'oxycombustion ont été développés.

Par exemple, le document US-A-6196834 décrit un brûleur pilote pour le démarrage de brûleurs oxy-fuel. En réalité, un tel brûleur pilote ne peut pas fonctionner correctement avec tout type d'oxydant. En particulier, s'il fonctionne correctement avec un oxydant riche en oxygène, ce qui est son but, il ne fonctionnera pas bien avec de l'air comme oxydant. En effet, toutes choses égales par ailleurs, le débit d'air stoechiométrique nécessaire à la combustion du gaz combustible est environ cinq fois supérieur à celui du débit de gaz riche en oxygène nécessaire. Un tel changement d'oxydant est difficilement compatible avec la fiabilité exigée pour une flamme pilote, qui conditionne la sécurité de la chaudière ou du four.

Par conséquent, ce brûleur pilote devra toujours fonctionner avec, comme comburant, le même gaz riche en oxygène. Or il peut s'avérer très gênant d'avoir à alimenter en gaz riche en oxygène le ou les brûleurs pilote de ces brûleurs principaux. Cela peut obliger à démarrer ou à garder en fonctionnement une unité de séparation d'air.

Un but de la présente invention est de pallier tout ou partie des inconvénients de l'art antérieur relevés ci-dessus, c'est-à-dire notamment d'obtenir une flamme pilote de bonne qualité, présentant la stabilité et la sécurité requises, tant en fonctionnement à l'air qu'avec un gaz riche en oxygène comme comburant du brûleur pilote.

A cette fin, l'invention concerne un système comprenant au moins un brûleur pilote et au moins un brûleur principal plus puissant, ledit brûleur pilote comprenant :
- au moins un premier tube ouvert à une extrémité et comportant au moins une première ligne d'amenée apte à admettre un gaz combustible dans ledit premier tube ; et
- au moins un second tube ouvert à une extrémité et comportant au moins une troisième ligne d'amenée apte à admettre un gaz riche en oxygène dans ledit second tube ;
**caractérisé en ce que** ledit brûleur pilote comprend, en outre, au moins une seconde ligne d'amenée apte à alimenter en air ledit premier tube.

Le brûleur pilote selon l'invention comprend au moins deux tubes ouverts à l'une de leurs extrémités. Le premier comprend au moins une ligne d'amenée destinée à être connectée à une source de gaz combustible et au moins une autre destinée à être connectée à une source d'air.

Selon un mode particulier, le gaz combustible est du gaz naturel, du propane ou du butane. Selon un autre mode, ce gaz combustible est du gaz de pétrole liquéfié (GPL), alimenté en phase gazeuse dans le brûleur pilote. Le second tube comprend au moins une ligne d'amenée destinée à être connectée à une source de gaz riche en oxygène, c'est à dire comprenant au moins 80% en volume d'oxygène. Selon un mode particulier, le gaz riche en oxygène comprend au moins 90% en volume d'oxygène. Selon un autre mode particulier, ce gaz comprend au moins 95% en volume d'oxygène.

Les sources peuvent être des réservoirs de gaz liquide ou sous pression, ou des installations destinées à ces gaz à la demande, ou bien encore une combinaison de ces modes d'obtention. Le gaz riche en oxygène est éventuellement produit sur place par une installation de distillation cryogénique. L'air peut avoir subi des traitements, par exemple de filtration et/ou de dégraissage et/ou de compression. Dans une configuration particulière cet air provient du réseau air instrument. Le gaz combustible peut provenir d'un réservoir ou d'un réseau de distribution.

Lors de l'arrêt du brûleur pilote, un débit de gaz de balayage (typiquement de l'air qui peut avoir subi des traitements) peut être injecté dans les deux tubes.

Si l'on fait abstraction des branchements réalisés pour les connecter avec les sources de gaz, les deux tubes du brûleur pilote ont une forme géométrique isomorphe à un cylindre ouvert à une extrémité et fermé à l'autre. Ils peuvent avoir une ou plusieurs parois communes. Selon un mode particulier, ce sont des canalisations sans parois latérales communes. Chacun de ces tubes peut être fabriqué en une ou plusieurs pièces, soudées ou jointes selon des méthodes connues de l'homme du métier.

Les tubes peuvent être notamment en acier carbone, acier inoxydable ou réfractaire. Ils peuvent aussi être constitués d'alliages à forte teneur en nickel, et/ou d'alliages comprenant du chrome et/ou du molybdène. Leurs extrémités peuvent comporter des parties en matériaux céramiques.

La circulation des gaz dans ces tubes, depuis les lignes d'amenée précitées vers les extrémités ouvertes de ces tubes, définit un sens d'écoulement, ou sens axial. Une section des tubes est alors définie comme l'intersection de ces tubes avec un plan orthogonal à la direction principale de l'écoulement. Ces tubes peuvent être de section variable. A chaque section correspond une section de passage, définie comme la surface ayant pour bord la section et à travers laquelle les gaz peuvent passer. Le débit de ces gaz peut être défini comme le produit de la surface de cette section de passage par la vitesse moyenne des gaz.

Le brûleur pilote peut comporter en outre des organes de régulation des débits des gaz admis dans les tubes. Ces organes peuvent être par exemple des vannes à ouverture commandée situées sur les lignes d'amenée connectant lesdits tubes aux sources de gaz. Ils peuvent aussi comprendre des vannes tout ou rien d'isolation, des dispositifs de purge, des évents, des clapets anti-retour, ou encore des soupapes ou des disques de rupture. Ces organes sont tels que, lorsque du gaz combustible et de l'air sont admis dans le premier tube, le débit de gaz riche en oxygène admis dans le second tube est nul. Le brûleur est alors en mode air et fonctionne en pré-mélange. En outre, lors de cette marche en mode air, un débit de gaz de balayage (typiquement de l'air qui peut avoir subi des traitements) peut traverser le second tube.

Selon une autre configuration, correspondant au mode oxycombustion, ou mode de fonctionnement en gaz riche à l'oxygène, les organes de régulation des débits admis dans les tubes sont tels que le débit d'air admis dans le premier tube est nul et que le débit de gaz riche en oxygène admis dans le second tube est non nul. Ainsi le gaz combustible et le gaz riche en oxygène sont injectés dans des tubes différents. Pour qu'une flamme pilote puisse se développer, le gaz combustible et le gaz riche en oxygène doivent entrer en contact en sortie des deux tubes.

Par ailleurs, des modes de réalisation de l'invention peuvent comporter l'une ou plusieurs des caractéristiques suivantes :
- ledit brûleur pilote comprend des électrodes aptes à produire au moins un arc électrique ou une étincelle pour l'allumage dudit brûleur pilote ;
- ledit brûleur pilote comprend un dispositif conçu pour et apte à contrôler la présence d'une flamme issue dudit brûleur pilote ;
- ledit premier tube est au moins partiellement située à l'intérieur dudit second tube ;
- ledit second tube est au moins partiellement située à l'intérieur dudit premier tube ;
- au moins une partie dudit premier tube et au moins une partie dudit second tube présentent des sections de passage des gaz de surface constante ;
- lesdites parties desdits tubes présentant des sections de passage des gaz de surface constante ont des sections circulaires concentriques ;
- le rapport de la surface de la section de passage minimale dudit gaz combustible à proximité de la sortie dudit premier tube et de la surface de la section de passage minimale dudit gaz riche en oxygène à proximité de la sortie dudit second tube est supérieur ou égal à 0.15 à inférieur ou égal à 5.5.
- ledit premier tube comprend en sortie une partie convergente dans le sens de l'écoulement dudit gaz combustible ;
- ledit second tube comprend en sortie une partie convergente dans le sens de l'écoulement dudit gaz riche en oxygène ;
- ledit second tube comprend des éléments destinés à réduire la section de passage dudit second tube ;

L'invention peut concerner également tout dispositif ou procédé alternatif comprenant toute combinaison des caractéristiques ci-dessus ou ci-dessous.

Les électrodes dont il est question ci-dessus servent à allumer le brûleur pilote. On se sert en général d'une électrode et d'une contre-électrode convenablement isolées et raccordées à une source d'électricité, de manière à pouvoir générer un arc électrique ou une étincelle entre les deux électrodes, selon des méthodes connues de l'homme du métier. Cet arc doit se situer à l'extrémité des tubes, dans la zone ou le gaz combustible sortant du premier tube rencontre le gaz riche en oxygène sortant du second.

Dans une configuration particulière, l'électrode est placée en sortie du premier tube, à l'endroit où le gaz combustible quitte le tube, de façon à assurer une ignition au plus rapide lors de l'ouverture de l'organe de contrôle du gaz combustible. Selon un mode de réalisation, l'énergie libérée par l'arc électrique ou l'étincelle est supérieure ou égal à 8 J (joule), de préférence entre 9 et 15 J, et idéalement entre 10 et 12 J.

Les moyens de contrôle de la présence d'une flamme pilote peuvent être de différentes natures. Selon un mode avantageux, on se sert desdites électrodes comme d'un détecteur de flamme. En effet, la présence d'une flamme modifie la résistivité du milieu situé entre les deux électrodes. Une mesure du courant aux bornes des électrodes permet de détecter la présence ou non d'une flamme. Selon un autre mode de réalisation, on se sert d'une électrode distincte pour la détection de flamme, de façon à séparer les fonctions d'opération et de sécurité.

D'autres principes de détection de la présence d'une flamme peuvent être utilisés, par exemple en mesurant le rayonnement ultraviolet (UV). En effet, la combustion de l'hydrogène présent dans le combustible du brûleur pilote émet un rayonnement important dans le spectre UV. Un autre principe repose sur la détection du rayonnement infrarouge (IR) émis par la combustion. Ces modes peuvent être mis en oeuvre indistinctement. Le principe de ce brûleur pilote permet d'utiliser le même détecteur de présence de flamme pour le mode de fonctionnement en oxycombustion et pour le mode de fonctionnement à l'air. On peut aussi choisir des moyens de détection de flamme différents spécifiques à chacun de ces modes. Les moyens de détection sont placés selon l'état de l'art, en général par rapport à la position de la racine de flamme, pour permettre une détection fiable.

Selon une géométrie particulière du brûleur, l'un des deux tubes se trouve à au moins en partie à l'intérieur de l'autre. Par exemple, la partie terminale du premier tube, c'est à dire comprenant l'extrémité ouverte, se trouve à l'intérieur du second tube. La section de sortie du premier tube peut se trouver au même niveau que celle du second tube, ou bien légèrement en amont ou en aval.

Selon un autre mode de réalisation de l'invention, c'est le second tube qui se trouve au moins en partie à l'intérieur du premier. Par exemple, la partie terminale du second tube, c'est à dire comprenant l'extrémité ouverte, se trouve à l'intérieur du premier tube. La section de sortie du second tube peut se trouver au même niveau que celle du premier tube, ou bien légèrement en amont ou en aval.

Les tubes peuvent être maintenus dans leur position relative par des éléments de centrage. Ces éléments peuvent aussi servir à tenir l'électrode et/ou la contre-électrode.

Selon une géométrie encore plus particulière, au moins une partie de chaque tube présente une section circulaire. Selon un mode préféré, les tubes sont de section constante et concentriques dans cette partie. Ils se présentent alors, dans cette partie, comme des cylindres coaxiaux.

Indépendamment de leur forme générale, l'un et/ou l'autre des deux tubes peut présenter une partie terminale convergente, c'est à dire que les sections de passage vont en se rétrécissant dans le sens de l'écoulement avant la sortie du gaz. Les tubes peuvent aussi présenter une striction à proximité de leur sortie. Par « à proximité de la sortie», on désigne la partie terminale du tube qui va de sa sortie et remonte jusqu'à 5 fois le diamètre hydraulique de la section de sortie du tube. Cette striction permet d'augmenter la vitesse déjection des gaz et d'empêcher un retour de flamme.

Pour que le brûleur fonctionne correctement à la fois en mode oxycombustion et en mode air, les inventeurs ont établi que le ratio de surface des sections de passage doit avoir la propriété suivante. Si l'on appelle S1 la section de passage minimale du premier tube à proximité de la sortie de ce premier tube et S2 la section de passage minimale à proximité de la sortie de ce second tube, il faut que le ratio S1/S2 soit compris dans l'intervalle fermé 0.15 - 5.5. Ceci assure que la flamme pilote ne sera pas soufflée et qu'elle présentera les propriétés souhaitées pour garantir une opération sûre et stable.

Pour renforcer les propriétés de la flamme, l'un et/ou l'autre des tubes peut présenter une partie convergente dans le sens de l'écoulement à proximité de sa sortie.

L'ajustement des sections de passages de l'un et/ou l'autre tube peut se faire en introduisant des éléments pleins présentant des ouvertures ou des perforations. En orientant convenablement ces ouvertures, il est possible d'imprimer un mouvement de rotation des gaz autour de la direction principale d'écoulement. Cet effet peut aussi être obtenu en ajoutant des éléments tels que des ailettes ou des rainures dans les tubes, de manière à dévier l'écoulement des fluides.

En sortie ou à proximité de la sortie de l'un ou l'autre des tubes, des déflecteurs, des swirleurs (dispositif conçu pour et apte à imprimer un mouvement de rotation) ou d'autres dispositifs peuvent être installés pour augmenter la turbulence dans la zone de formation de la flamme pilote.

L'invention concerne également une installation de combustion utilisant un gaz comburant comprenant :
- au moins une chaudière ou un four d'oxycombustion conçu pour et apte à fonctionner en mode oxycombustion avec un gaz riche en oxygène comme comburant ou en mode dégradé avec de l'air utilisé comme comburant ;
- au moins une unité de séparation d'air apte à délivrer un gaz riche en oxygène ; et
- au moins une ligne d'alimentation en air comprimé ou au moins un compresseur d'air ;
   **caractérisée en ce que :**
- ladite chaudière ou ledit four comprend au moins un système tel que décrit ci-dessus ;
- ladite ligne d'amenée de gaz riche en oxygène dudit brûleur pilote est connectée fluidiquement à ladite unité de séparation d'air de manière à pouvoir recevoir du gaz riche en oxygène produit par ladite unité de séparation d'air ; et
- ladite ligne d'amenée d'air dudit brûleur pilote est connectée fluidiquement à ladite au moins une ligne d'alimentation en air comprimé ou audit au moins un compresseur d'air.

L'installation dont il est question ci-dessus met en oeuvre une chaudière ou un four d'oxycombustion, c'est à dire apte à brûler au moins un combustible en présence d'au moins un gaz riche en oxygène. Une telle chaudière peut par exemple servir à produire de la vapeur et/ou de l'eau chaude ou de l'huile chaude et/ou de la puissance électrique et/ou mécanique. L'oxycombustion est le mode normal de fonctionnement. Toutefois, cette chaudière ou ce four peuvent en général fonctionner à l'air, selon un mode dit « dégradé », en ce sens que le rendement peut être affecté, ou que la capture de CO2 dans les fumées sera plus difficile. En effet, ces installations d'oxycombustion sont par définition optimisées pour fonctionner avec comme comburant un gaz riche en oxygène.

Etant données les quantités importantes de gaz riche en oxygène requises, au moins une unité de séparation d'air peut s'avérer nécessaire. On peut aussi utiliser un réservoir de stockage de gaz riche en oxygène, alimenté par au moins une unité de séparation d'air ou par camion. Pour le fonctionnement à l'air, on a recours à un réseau d'air comprimé existant ou bien l'on se sert d'un ou plusieurs compresseurs, avec la possibilité d'incorporer des opérations de filtration et/ou dégraissage.

Les inventeurs ont déterminé qu'il est intéressant d'équiper cette chaudière ou ce four d'au moins un brûleur pilote tel que décrit ci-dessus et de le connecter à la source de gaz riche en oxygène utilisée pour la chaudière ou le four, ainsi qu'à la source d'air.

Le ou les brûleurs pilote peuvent être placés, par rapport au brûleur principal auquel il est associé, dans différentes configurations. Selon une configuration particulière, un brûleur pilote est situé à l'intérieur d'un brûleur principal, ceci voulant dire que les sorties du brûleur pilote se situent physiquement dans le périmètre des sorties dudit brûleur principal. Selon une autre configuration, le brûleur pilote est situé à une certaine distance du brûleur principal. Selon une autre configuration, le brûleur pilote est situé à une certaine distance du brûleur principal, de telle manière que la flamme pilote soit située dans ou rencontre le flux de gaz éjectés par le brûleur principal. Selon un mode de réalisation, la flamme pilote converge vers les gaz éjectés par un brûleur principal.

L'invention concerne également un procédé de combustion, mettant en oeuvre :
- au moins une chaudière ou un four d'oxycombustion comprenant un ou plusieurs brûleurs principaux conçus pour et aptes à fonctionner en mode oxycombustion avec un gaz riche en oxygène utilisé comme comburant ou en mode dégradé avec de l'air utilisé comme comburant, ladite chaudière ou ledit four comprenant au moins un brûleur pilote tel que décrit ci-dessus ;
- une source de gaz riche en oxygène comprenant au moins une unité de séparation d'air apte à délivrer un gaz riche en oxygène ; et
- une source d'air comprenant au moins une ligne d'alimentation en air comprimé ou au moins un compresseur d'air ;
**caractérisé en ce qu**'il comprend au moins l'étape a) suivante :
a) injecter de l'air, comme comburant, en provenance de ladite source d'air, dans les brûleurs principaux de ladite chaudière ou dudit four, ainsi que dans ladite ligne d'amenée d'air dudit brûleur pilote, ladite ligne d'amenée de gaz riche en oxygène dudit brûleur pilote n'introduisant pas de gaz riche en oxygène dans ledit brûleur pilote.

Par ailleurs, des modes de réalisation du procédé selon l'invention peuvent comporter l'une ou plusieurs des caractéristiques suivantes :
- le procédé comprend l'étape b) suivante :
   b) injecter un gaz riche en oxygène, comme comburant, en provenance de ladite source de gaz riche en oxygène, dans les brûleurs principaux de ladite chaudière ou dudit four, ainsi que dans ladite ligne d'amenée de gaz riche en oxygène dudit brûleur pilote, ladite ligne d'amenée d'air dudit brûleur pilote n'introduisant pas d'air dans ledit brûleur pilote ;
- le procédé comprend les étapes suivantes :
   c) injecter dans ladite ligne d'amenée de gaz combustible dudit brûleur pilote un premier combustible de type gazeux ; et
   d) alimenter au moins un brûleur principal de ladite chaudière ou dudit four par un second combustible.
- ledit premier combustible de type gazeux a une composition identique ou différente de celle dudit second combustible.

Selon des modes de réalisation alternatifs, les étapes a) et b) décrites ci-dessous peuvent être mises en oeuvre dans un ordre quelconque. Les étapes c) et d) sont quant à elles simultanées avec les étapes a) et b).

Lorsque le ou les brûleurs principaux de la chaudière ou du four sont en mode oxycombustion, le brûleur pilote sera en général lui-même en mode oxycombustion (étape b).

Lorsque la chaudière ou le four sera amené à fonctionner en mode air, par exemple en phase de démarrage, on pourra très avantageusement et sans risque faire fonctionner le brûleur pilote également en mode air (étape a). Ceci évite de consommer du gaz riche en oxygène et d'avoir à démarrer l'unité de séparation d'air uniquement pour le brûleur pilote.

Si la chaudière ou le four est en mode oxycombustion et que l'unité de séparation d'air vient à faire défaut, on pourra continuer d'utiliser le brûleur pilote à l'air sans risque particulier et assurer de ce fait la présence d'une flamme pilote dans toutes conditions d'opération de la chaudière ou du four. L'étape a) peut donc succéder à l'étape b). Elle correspondra alors par exemple à une période de maintenance de la source de gaz riche en oxygène.

Les étapes c) et d) peuvent être dans un ordre quelconque. Selon un mode particulier, l'étape c) démarre avant l'étape d). En général, elles sont concomitantes avec les étapes a) ou b).

La chaudière ou le four peuvent mettre en oeuvre, dans le ou les brûleurs principaux, un ou plusieurs combustibles tels que le gaz naturel, le pétrole brut et ses dérivés (tels que le bitume, le fioul lourd ou léger, les résidus pétroliers, etc.), le charbon, le lignite, la tourbe, la biomasse, les gaz de pétrole liquéfiés, des slurries, des boues, etc.

D'autres particularités et avantages apparaîtront à la lecture de la description ci-après, faite en référence aux figures dans lesquelles :
- la figure 1 représente un brûleur pilote selon l'invention en vue de côté ou longitudinale,
- la figure 2 représente la partie tubulaire du même brûleur pilote, en vue de face ou axiale, les gaz éjectés étant dirigés vers l'observateur.

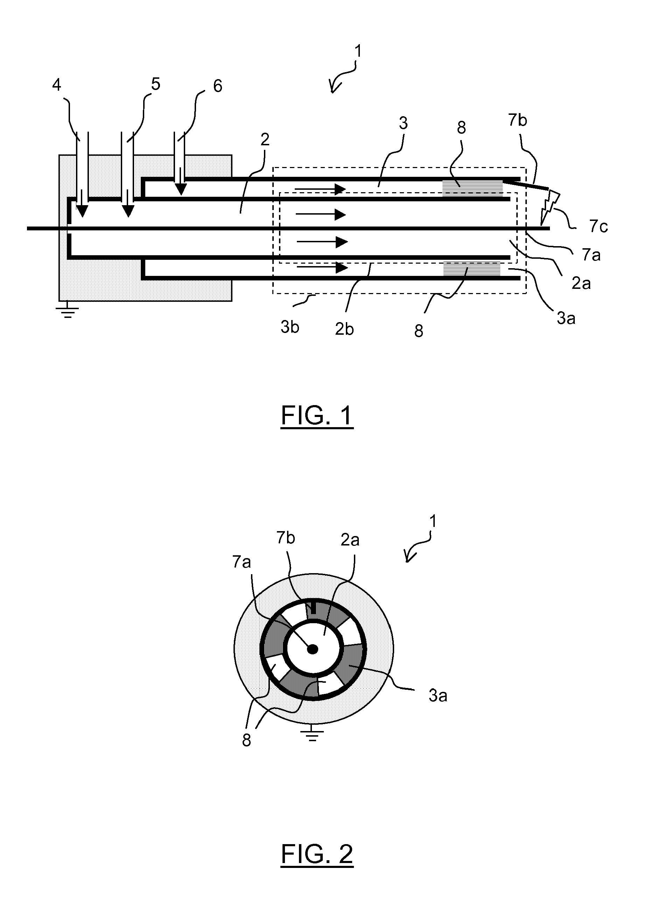

Sur la figure 1, on voit le brûleur pilote 1 dans son ensemble. Il comprend un premier tube 2 ouvert à son extrémité aval 2a pouvant recevoir du gaz combustible par une première ligne d'amenée 4 et de l'air par une seconde ligne d'amenée 5. Le brûleur pilote 1 comprend en outre un second tube 3 ou vert à son extrémité aval 3a et pouvant recevoir un gaz riche en oxygène par une ligne d'amenée 6. Les deux tubes se présentent comme des cylindres co-axiaux, le second tube 3 entourant le premier tube 2.

Au centre du premier tube 2 est disposée une électrode 7a, connectées à une source de courant et convenablement isolée électriquement, sauf à son extrémité. Elle est située dans l'axe du tube 2, son extrémité dénudée se trouvant au niveau de l'extrémité ouverte 2a du premier tube 2. Le second tube 3 comporte une contre-électrode 7b située au niveau de sa section de sortie, en contact électrique avec ledit tube 3. Elle assure également une continuité électrique avec la terre. Les deux électrodes 7a et 7b sont disposées de façon à pouvoir produire un arc électrique ou une étincelle 7c entre lesdites électrodes 7a et 7b apte à allumer la flamme du brûleur pilote 1.

Ces électrodes 7a et 7b servent également de détecteur de flamme. Elles constituent les bornes d'un dipôle dont on mesure le courant par des éléments non-représentés sur la figure.

Le tube 3 comporte en outre un élément 8 à proximité de sa sortie. Il est conçu pour restreindre la section de passage du gaz riche en oxygène dans ledit tube 3. Il se présente sous la forme d'un obstacle à l'écoulement du gaz, présentant des perforations on des canaux desquels le gaz sort sous la forme de jets avec une plus grande vitesse qu'en amont de l'élément 8. La section de passage 2a du tube 2 au niveau de l'élément 8 a une surface S2. Si l'on appelle S3 la surface de la section de passage du gaz riche en oxygène à travers l'élément 8, le rapport S2 / S3 a une valeur comprise entre 0.15 et 5.5. Selon u mode de réalisation particulier, ce rapport est compris entre 0.15 et 2.0.

Sur la figure 2, on voit les sections de passage 2a et 2b, respectivement des tubes 2 et 3. La section 2a a la forme d'un disque simplement diminué par la présence de l'électrode 7a en son centre. La section 3a serait annulaire sans la présence de l'élément 8 qui vient restreindre le passage. Dans l'exemple représenté, le passage peut se faire seulement sur quatre secteurs égaux de l'anneau. Les secteurs passants et non-passants alternent le long de l'anneau 3a.

## Revendications

1. Système comprenant au moins un brûleur pilote (1) et au moins un brûleur principal plus puissant, ledit brûleur pilote (1) comprenant :
- au moins un premier tube (2) ouvert à une extrémité (2a) et comportant au moins une première ligne d'amenée (4) apte à admettre un gaz combustible dans ledit premier tube (2) ; et
- au moins un second tube (3) ouvert à une extrémité (3a) et comportant au moins une troisième ligne d'amenée (6) apte à admettre un gaz riche en oxygène (6) dans ledit second tube (3) ;
**caractérisé en ce que** ledit brûleur pilote (1) comprend, en outre, au moins une seconde ligne d'amenée (5) apte à alimenter en air ledit premier tube (2).

2. Système selon la revendication 1, **caractérisé en ce que** ledit brûleur pilote (1) comprend :
- des électrodes (7a, 7b) aptes à produire au moins un arc électrique ou une étincelle (7c) pour l'allumage dudit brûleur pilote (1) ; et
- un dispositif (7a, 7b) conçu pour et apte à contrôler la présence d'une flamme issue dudit brûleur pilote (1).

3. Système selon l'une quelconque des revendications 1 ou 2, **caractérisé en ce que** :
- ledit premier tube (2) est au moins partiellement située à l'intérieur dudit second tube (3) ; ou
- ledit second tube (3) est au moins partiellement situé à l'intérieur dudit premier tube (2).

4. Système selon l'une quelconque des revendications 1 à 3, **caractérisé en ce qu'**au moins une partie (2b) dudit premier tube (2) et au moins une partie (3b) dudit second tube (3) présentent des sections de passage des gaz de surface constante.

5. Système selon la revendication 4, **caractérisé en ce que** lesdites parties (2b, 3b) desdits tubes (2, 3) présentant des sections de passage des gaz de surface constante ont des sections circulaires concentriques (2a, 3a).

6. Système selon l'une quelconque des revendications 1 à 5, **caractérisé en ce que** le rapport de la surface de la section de passage (2a) minimale dudit gaz combustible à proximité de la sortie dudit premier tube (2) et de la surface de la section de passage (3a) minimale dudit gaz riche en oxygène à proximité de la sortie dudit second tube (3) est supérieur ou égal à 0.15 et inférieur ou égal à 5.5.

7. Système selon l'une quelconque des revendications 1 à 6, **caractérisé en ce que** :
- ledit premier tube (2) comprend en sortie une partie convergente dans le sens de l'écoulement dudit gaz combustible ; et/ou
- ledit second tube (3) comprend en sortie une partie convergente dans le sens de l'écoulement dudit gaz riche en oxygène ; et/ou
- ledit second tube (3) comprend des éléments (8) destinés à réduire la section de passage dudit second tube (3).

8. Installation de combustion utilisant un gaz comburant comprenant :
- au moins une chaudière ou un four d'oxycombustion conçu pour et apte à fonctionner en mode oxycombustion avec un gaz riche en oxygène comme comburant ou en mode dégradé avec de l'air utilisé comme comburant ;
- au moins une unité de séparation d'air apte à délivrer un gaz riche en oxygène ; et
- au moins une ligne d'alimentation en air comprimé ou au moins un compresseur d'air ;
**caractérisée en ce que :**
- ladite chaudière ou ledit four comprend au moins un système selon l'une quelconque des revendications 1 à 7 ;
- ladite ligne d'amenée de gaz riche en oxygène (6) dudit brûleur pilote (1) est connectée fluidiquement à ladite unité de séparation d'air de manière à pouvoir recevoir du gaz riche en oxygène produit par ladite unité de séparation d'air ; et
- ladite ligne d'amenée d'air (5) dudit brûleur pilote (1) est connectée fluidiquement à ladite au moins une ligne d'alimentation en air comprimé ou audit au moins un compresseur d'air.

9. Procédé de combustion, mettant en oeuvre :
- au moins une chaudière ou un four d'oxycombustion comprenant un ou plusieurs brûleurs principaux conçus pour et aptes à fonctionner en mode oxycombustion avec un gaz riche en oxygène utilisé comme comburant ou en mode dégradé avec de l'air utilisé comme comburant, ladite chaudière ou ledit four comprenant au moins un brûleur pilote (1) tel que défini dans l'une quelconque des revendications 1 à 7 ;
- une source de gaz riche en oxygène comprenant au moins une unité de séparation d'air apte à délivrer un gaz riche en oxygène ; et
- une source d'air comprenant au moins une ligne d'alimentation en air comprimé ou au moins un compresseur d'air ;
**caractérisé en ce qu'**il comprend au moins l'étape a) suivante :
a) injecter de l'air, comme comburant, en provenance de ladite source d'air, dans les brûleurs principaux de ladite chaudière ou dudit four, ainsi que dans ladite ligne d'amenée d'air (5) dudit brûleur pilote (1), ladite ligne d'amenée de gaz riche en oxygène (6) dudit brûleur pilote (1) n'introduisant pas de gaz riche en oxygène dans ledit brûleur pilote (1).

10. Procédé de combustion selon la revendication 9, **caractérisé en ce qu'**il comprend l'étape b) suivante :
b) injecter un gaz riche en oxygène, comme comburant, en provenance de ladite source de gaz riche en oxygène, dans les brûleurs principaux de ladite chaudière ou dudit four, ainsi que dans ladite ligne d'amenée de gaz riche en oxygène (6) dudit brûleur pilote (1), ladite ligne d'amenée d'air (5) dudit brûleur pilote (1) n'introduisant pas d'air dans ledit brûleur pilote (1) ;
lesdites étapes a) et b) pouvant être dans un ordre quelconque.

11. Procédé selon l'une quelconque des revendications 9 ou 10, **caractérisé en ce qu'**il comprend les étapes suivantes :
c) injecter dans ladite ligne d'amenée de gaz combustible (4) dudit brûleur pilote (1) un premier combustible de type gazeux ; et
d) alimenter au moins un brûleur principal de ladite chaudière ou dudit four par un second combustible.
